# EUROPEAN PATENT SPECIFICATION

(11) **EP 3 023 274 B1**
(45) Date of publication and mention of the grant of the patent: **08.08.2018**
(21) Application number: 15195059.9
(22) Date of filing: 17.11.2015
(51) Int. Cl.: B60H 1/00

(54) **VEHICLE AIR-CONDITIONING APPARATUS**
FAHRZEUGKLIMAANLAGE
APPAREIL DE CLIMATISATION DE VEHICULE

(30) Priority: 18.11.2014 JP 2014233502
(43) Date of publication of application: 25.05.2016
(73) Proprietor: Valeo Japan Co., Ltd., Saitama 360-0193 (JP)
(72) Inventor: NAGANO, Hideki, SAITAMA 360-0193 (JP); HAYASHI, Naoto, SAITAMA 360-0193 (JP)
(74) Representative: Metz, Gaëlle

(56) References cited:
- JP-A- 2001 294 032
- JP-A- 2009 061 863
- JP-A- 2010 053 763
- JP-A- 2012 035 688
- KR-A- 20130 093 395
- US-A1- 2006 288 722

## Description

### BACKGROUND OF THE INVENTION

### 1. Technical Field

The present invention relates to a vehicle air-conditioning apparatus, and to a vehicle air-conditioning apparatus in which measures to reduce a noise in an intake unit is implemented.

### 2. Description of the Invention

In a vehicle air-conditioning apparatus, a noise generated in a blower passes through an air conditioning case, and enters a vehicle interior from a blowout port for blown air, and hence a problem of impairment of silence in the vehicle interior may arise. In order to solve this problem, a technology of providing an air-conditioning casing with a sound absorbing material is proposed (For example, JP-A-2000-85339). A technology of providing an air-intake duct which constitutes part of a seat air-conditioning system with a reflecting wall configured to reflect a noise entering the duct from the blower is proposed (For example, see JP-A-2006-130989 and JP-A-2012-35688). A technology of forming an inner wall surface of the duct configured to introduce blown air into a blowout port in the vehicle interior in a staircase (For example, see JP-A-2001-294032).

Although it is not a technology to reduce a noise generated in a blower, a technology in which a surface of an air-conditioning case that opposes a core surface of an evaporator of an air conditioning case is formed into a staircase shape along an air inflow direction is proposed as a technology of reducing a noise caused by a separation flow that is generated in a diffuser unit in which an air flow channel is enlarged (For example, See JP-A-2009-61863).

JP-A-2012-356688 discloses a vehicle air-conditioning apparatus showing all the features from the preamble according to claim 1.

However, the technology using the sound absorbing material as described in JP-A-2000-85339 has a problem of an increase in cost. The noise generated in the blower enters the vehicle interior not only from the blowout port of the blown air, but also from an inside air introduction port of the intake unit arranged on an upstream side of the blown air with respect to the blower. However, measures to reduce a noise in the intake unit are not implemented in JP-A-2006-130989, JP-A-2001-294035, and JP-A-2009-61863

It is an object of the invention to provide a vehicle air-conditioning apparatus, in which measures to reduce a noise in an intake unit are implemented.

The invention provides a vehicle air-conditioning apparatus of the invention including: an outside air introduction port configured to take air outside a vehicle; an inside air introduction port configured to take air in a vehicle interior; an intake unit having an intake passage in which air taken from one or both of the outside air introduction port and the inside air introduction port flows, and an outlet port from which the taken air flows out; a blast unit having an intake port for taking air flowed out from the outlet port and a blower for sucking air from the intake port and blowing the air to downstream; and a temperature regulating unit configured to regulate the temperature of blown air blown by the blower, wherein a wall that forms the intake passage includes a cylindrical portion having a downstream end at the outlet port, and part of an inner wall surface of the cylindrical portion is a reflecting surface configured to reflect a noise of the blower entering the intake passage toward the outlet port.

According to the vehicle air-conditioning apparatus of the invention, preferably, the reflecting surface opposes a surface that is formed by the intake port. A reflected sound is concentrated to a noise generating source (blower) further effectively to further reduce the noise.

According to the vehicle air-conditioning apparatus of the invention, the reflecting surface is provided on a lower portion of an inner wall surface of the cylindrical portion, and a surface connected to an upper end of the reflecting surface and a surface connected to a lower end of the reflecting surface form downward inclined surfaces directed toward the outlet port. Accumulation of water such as rain water in the intake passage may be prevented.

According to the vehicle air-conditioning apparatus of the invention, the thickness of a portion of wall where the reflecting surface is provided is larger than thickness of a portion of wall where the surface connected to the reflecting surface is provided. The portion of the wall where the surface connected to the reflecting surface is provided is not formed to have a thick shape, which contributes to a reduction of thickness of a case. In addition, the portion of the wall where the reflecting surface is provided contributes to reduce a transmissivity of a sonic wave to improve a reflectivity thereof. Consequently, the noise may further be reduced.

According to the vehicle air-conditioning apparatus of the invention, preferably, a reinforcing rib is provided on an outer wall surface of the portion of the wall where the reflecting surface is provided. By increasing rigidity of the portion of the wall where the reflecting surface is provided, the transmissivity of the sonic wave can be reduced to improve the reflectivity and hence the noise can further be reduced.

According to the vehicle air-conditioning apparatus of the invention, preferably, the reflecting surface is a depressed curved surface. A reflected sound is concentrated to a noise generating source (blower) further effectively to further reduce the noise.

According to the vehicle air-conditioning apparatus of the invention, preferably, the reflecting surface includes a plurality of areas having different curvatures. An attenuation effect for sounds in a larger frequency range can be obtained.

According to the vehicle air-conditioning apparatus of the invention, preferably, a plurality of reflecting surfaces and the surfaces connected to the reflecting surfaces are arranged alternately in a staircase manner and the reflecting surfaces have nonsimilar shapes with respect to each other. An attenuation effect for sounds in a larger frequency range can be obtained.

According to the vehicle air-conditioning apparatus of the invention, preferably, the plurality of reflecting surfaces are depressed curved surfaces, and are arranged in descending order in the maximum curvature of a lateral cross section in a width direction from the outlet port side of the reflective surface. An attenuation effect for sounds in a larger frequency range can be obtained.

The invention provides a vehicle air-conditioning apparatus in which measures to reduce a noise in an intake unit are implemented.

### BRIEF DESCRIPTION OF DRAWINGS

Fig. 1 is a schematic view illustrating an example of a vehicle air-conditioning apparatus of an embodiment;
Fig. 2 is a schematic drawing illustrating an example of a reflecting surface useful for understanding the invention;
Fig. 3 is a schematic drawing illustrating a first example of a modification of the reflecting surface illustrated in Fig. 2 according to the invention as defined in claim 1.
Fig. 4 is a schematic drawing illustrating a second example of a modification of the reflecting surface illustrated in Fig. 2.
Fig. 5 is a schematic drawing illustrating a third example of a modification of the reflecting surface illustrated in Fig. 2.
Fig. 6 is a schematic drawing illustrating a fourth example of a modification of the reflecting surface illustrated in Fig. 2.

### DETAIL DESCRIPTION OF INVENTION

Referring now to the attached drawings, a mode of the invention will be described below. Embodiments described below are an example of the invention, and the invention is not limited to the following embodiments. In the specification and the drawings, components having identical reference signs are the same components. Various modifications may be made for achieving advantageous effects of the invention.

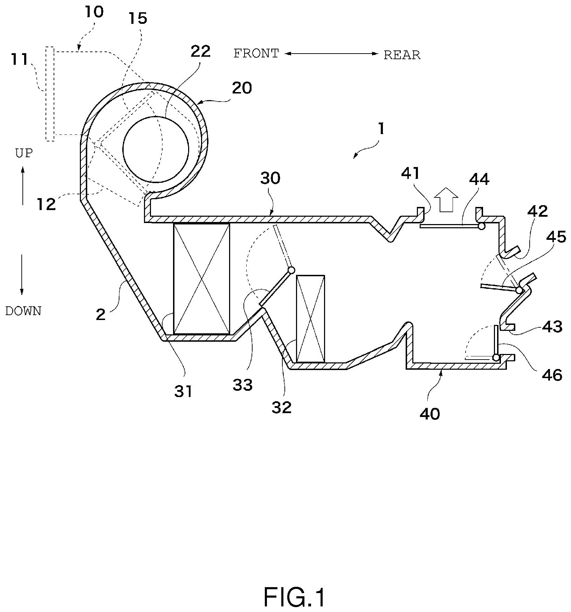

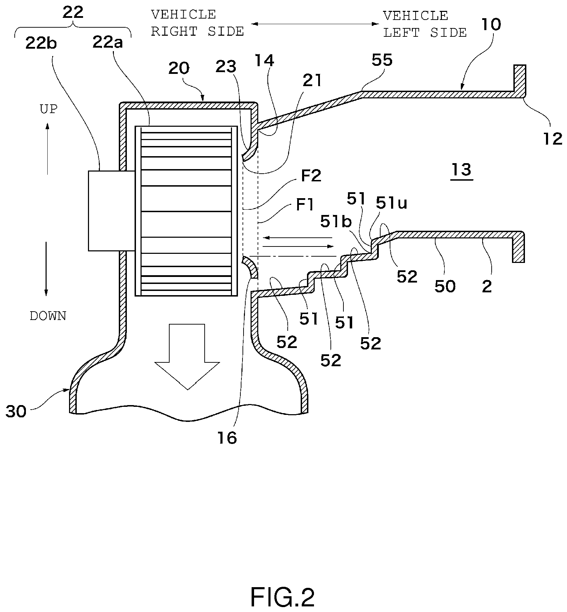

Fig. 1 is a schematic view illustrating an example of a vehicle air-conditioning apparatus of an embodiment. Fig. 2 is a schematic drawing illustrating an example of a reflecting surface. The embodiment provides a vehicle air-conditioning apparatus 1 of the embodiment including: as illustrated in Fig. 1 or 2, an intake unit 10 having an outside air introduction port 11 configured to take air outside a vehicle, an inside air introduction port 12 configured to take air in the vehicle interior, an intake passage 13 in which the air taken from one or both of the outside air introduction port 11 and the inside air introduction port 12 flows, and an outlet port from which the taken air flows out; a blast unit 20 having an intake port 21 for taking air flowed out from the outlet port 14 and a blower 22 for sucking air from the intake port 21 and blowing the air to downstream; and a temperature regulating unit 30 configured to regulate the temperature of blown air blown by the blower 22, wherein a wall that forms the intake passage 13 includes a cylindrical portion 50 having a downstream end at the outlet port 14, and portions of an inner wall surface of the cylindrical portion 50 are reflecting surfaces 51 configured to reflect a noise of the blower 22 entering the intake passage 13 toward the outlet port 14.

The vehicle air-conditioning apparatus 1 includes the intake unit 10, the blast unit 20, the temperature regulating unit 30, and an air distributing portion 40, and is formed integrally with a case 2 as illustrated in Fig. 1. The material of the case 2 is not specifically limited, and for example, synthetic resin such as polypropylene, polyethylene, polystyrene, or ABS resin (acrylonitrile butadiene styrene copolymer) are included.

The intake unit 10 includes the outside air introduction port 11 and the inside air introduction port 12 opened through the case 2 and an inside and outside air switching door 15 arranged in the case 2 as illustrated in Fig. 1. The intake passage 13 is an internal space of the case 2 in the intake unit 10 as illustrated in Fig. 2. A wall forming the intake passage 13 is a wall that partitions the intake passage 13, and constitutes part of the case 2. The outlet port 14 is an opening formed at a downstream end of the intake passage 13 as illustrated in Fig. 2.

The blast unit 20 includes the blower 22 arranged in the interior thereof as illustrated in Fig. 2. The blower 22 is arranged downstream of the intake unit 10. The blower 22 includes a centrifugal multi-blade fan 22a such as a sirocco fan or a turbo fan, and a motor 22b configured to drive the fan. The intake port 21 is an opening of a bell mouth 23, and is connected directly or indirectly via a duct for coupling (not illustrated) to the outlet port 14.

The temperature regulating unit 30 includes a cooling heat exchanger 31 arranged in the interior thereof as illustrated in Fig. 1. The cooling heat exchanger 31 is arranged downstream of the blower 22 to form part of a refrigerating cycle (not illustrated) to allow refrigerant to circulate therein, thereby the blown air is cooled as needed. The temperature regulating unit 30 may include a heat exchanger for heating 32 and an air mixing door 33 arranged downstream of the cooling heat exchanger 31. The heat exchanger for heating 32 allows, for example, warm water warmed by waste heat of an engine to pass therethrough, and heats the blown air as needed. The air mixing door 33 adjusts a percentage of air (cold air) bypassing the heat exchanger for heating 32 and a percentage of air (warm air) passing through the heat exchanger for heating 32.

The air distributing portion 40 includes a defrost opening 41, a ventilation opening 42, and a foot opening 43 as illustrated in Fig. 1. The openings 41, 42, and 43 are connected directly or indirectly via a duct for coupling (not illustrated) to a blowout port (not illustrated) configured to blow out air which is air-conditioned by the temperature regulating unit 30 toward the vehicle interior. The opening degrees of the openings 41, 42, and 43 are adjusted respectively by mode doors 44, 45, and 46.

The cylindrical portion 50 is part of a wall forming the intake passage 13, and is a duct having a downstream end at the outlet port 14 as illustrated in Fig. 2. The shape of the cylindrical portion 50 is not specifically limited and, for example, is a cylindrical shape or a square tube shape. As illustrated in Fig. 2, a bent portion 55 may be provided.

The reflecting surfaces 51 are portions of the inner wall surfaces of the cylindrical portion 50 opposing a surface F1 formed by the outlet port 14 as illustrated in Fig. 2. The reflecting surfaces 51 are flat surfaces or curved surfaces. When the reflecting surfaces 51 are flat surfaces, the reflecting surfaces 51 are preferably parallel to the surface F1 formed by the outlet port 14. The reflecting surfaces 51 reflect a noise of the blower 22 entered into the intake passage 13 toward the outlet port 14, so that the reflected sound is returned back to a noise generating source (blower 22) . Consequently, the noise propagating from the inside air introduction port 12 into the vehicle interior may be reduced. The reflecting surfaces 51 preferably oppose a surface F2 formed by the intake port 21. The reflected sound is concentrated to the noise generating source (blower 22) further effectively to further reduce the noise.

The reflecting surfaces 51 may be formed by projecting and depressing the wall itself of the cylindrical portion 50 to have concavities and convexities or may be provided by increasing the thickness of the wall of the cylindrical portion 50 to form concavities and convexities (not illustrated) as illustrated in Fig. 2. It is more preferable to form the reflecting surfaces 51 by forming the wall itself of the cylindrical portion 50 to have concavities and convexities in view of a point that the vehicle air-conditioning apparatus 1 can further be reduced in weight. The number of the reflecting surfaces 51 may be singular or plural. In Fig. 2, a mode having three reflecting surfaces 51 is illustrated as an example.

According to the vehicle air-conditioning apparatus 1 of the embodiment, the reflecting surfaces 51 are provided on a lower part of an inner wall surface of the cylindrical portion 50, and surfaces 52 connected to upper ends 51u and lower ends 51b of the reflecting surfaces 51 form downward inclined surfaces directed toward the outlet port 14. The downward inclined surface means a surface which is lowered in height with respect to the horizontal plane as it goes toward the outlet port 14. Accumulation of water such as rain water in the intake passage 13 may be prevented. Preferably, a water passing portion 16 is provided at a boundary between the intake unit 10 and the blast unit 20 to blow out water flowing along the surfaces 52 connected to the reflecting surfaces 51 toward downstream by the blower 22 or discharge to the outside of the case 2 as needed. The water passing portion 16 is, for example, a notch provided on the bell mouth 23, or a hole provided on a bottom surface of the case 2.

The reflecting surfaces 51 preferably have at an elongated shape having a height shorter than a width. The height of the reflecting surfaces 51 here is a length in the vertical direction of a vehicle when the reflecting surfaces 51 are provided on the lower part of the inner wall surface of the cylindrical portion 50 as illustrated in Fig. 2, for example. The width of the reflecting surfaces 51 is a length in the fore-and-aft direction of the vehicle when the reflecting surfaces 51 are provided on the lower part of the inner wall surface of the cylindrical portion 50 as illustrated in Fig. 2, for example. In Fig. 2, the fore-and-aft direction of the vehicle is a direction directed from the front surface to the rear surface of a paper on which Fig. 2 is illustrated.

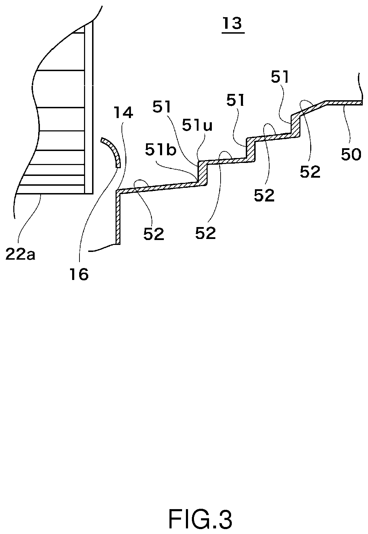

Fig. 3 is a schematic drawing illustrating a modification of the reflecting surface illustrated in Fig. 2 according to claim 1. According to the vehicle air-conditioning apparatus 1 of the embodiment, a wall thickness of a portion of wall where the reflecting surfaces 51 are provided is larger than a wall thickness of a portion where the surfaces 52 connected to the reflecting surfaces 51 are provided. A reduction in weight of the vehicle air-conditioning apparatus 1 is required, and the case tends to be thinned in order to realize the reduction in weight. If the thickness of the reflecting surfaces of the case is too thin, a sound may pass therethrough and hence the effect of noise reduction may be lowered. Therefore, the portions of the wall where the surfaces 52 connected to the reflecting surfaces 51 are provided is not formed to have a thick shape, which contributes to a reduction of thickness of the case 2. In addition, thickness of the portions of the wall of the case 2 where the reflecting surfaces 51 are provided is increased as needed. Consequently, the sonic wave transmissivity through the reflecting surfaces 51 is reduced and hence the noise can further be reduced. The thickness of the portions of the wall where the reflecting surfaces 51 are provided is not specifically limited, but for example, is 0.8 mm to 1.5 mm from a view point of the reduction in weight of the vehicle air-conditioning apparatus 1. The thickness of portions of the wall where the surfaces 52 connected to the reflecting surfaces 51 are provided is not limited, but for example, is 1.5 to 2.5 mm.

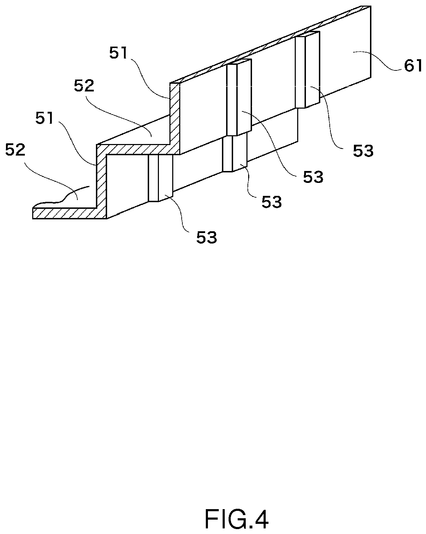

Fig. 4 is a schematic drawing illustrating a second example of a modification of the reflecting surfaces illustrated in Fig. 2. According to the vehicle air-conditioning apparatus 1 of the embodiment, preferably, reinforcing ribs 53 are provided on an outer wall surface 61 of the portions of the wall where the reflecting surfaces 51 are provided. The outer wall surface 61 is an outer wall surface of the case 2. By increasing rigidity of the portions of the wall where the reflecting surfaces 51 are provided, the transmissivity of the sonic wave can be reduced to improve the reflectivity and hence the noise can further be reduced. The reinforcing ribs 53 project from the outer wall surface 61. The reflecting surfaces 51 having almost the same thickness as the surfaces 52 connected to the reflecting surfaces 51 as illustrated in Fig. 4 contribute to a reduction in weight more than the first example of the modification of the reflecting surfaces illustrated in Fig. 3.

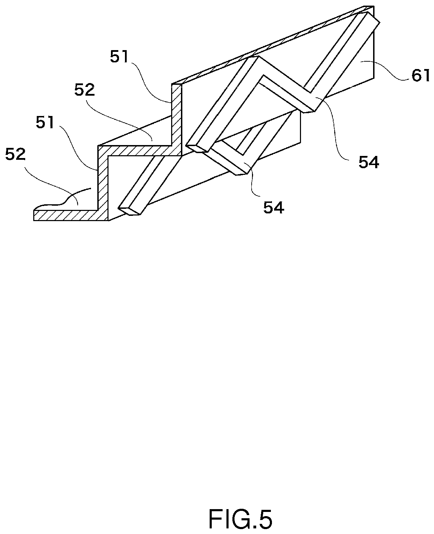

Fig. 4 illustrates the reinforcing ribs 53 in a mode being arranged along the vertical direction of the vehicle as an example. However, only enhancement of rigidity of the portions of the wall where the reflecting surfaces 51 are provided is necessary, and hence the invention is not limited to the arrangement of the reinforcing ribs 53. Fig. 5 is a schematic drawing illustrating a third example of a modification of the reflecting surfaces illustrated in Fig. 2. Reinforcing ribs 54 may be arranged in a lightning bolt shape or a zigzag shape, for example, as illustrated in Fig. 5.

The reinforcing ribs 53 and 54 may be molded integrally with the cylindrical portion 50 or may be provided separately therefrom. When forming the reinforcing ribs 53 and 54 separately from the cylindrical portion 50, the reinforcing ribs 53 and 54 may be formed of the same material as that of the cylindrical portion 50 or may be formed of a different material from that of the cylindrical portion 50. The cylindrical portion 50 is manufactured by injection molding and the reinforcing ribs 53 and 54 are molded integrally with the cylindrical portion 50, so that the reinforcing ribs may be formed into a cylindrical portion without adding a step.

In this embodiment, the thickness of the portion of the wall where the reflecting surfaces 51 are provided may be set to a thickness larger than that of the portion of the wall where the surfaces 52 connected to the reflecting surfaces 51 are provided and the reinforcing ribs 53 and 54 may be provided on the outer wall surface 61 of the portions of the wall where the reflecting surfaces 51 are provided.

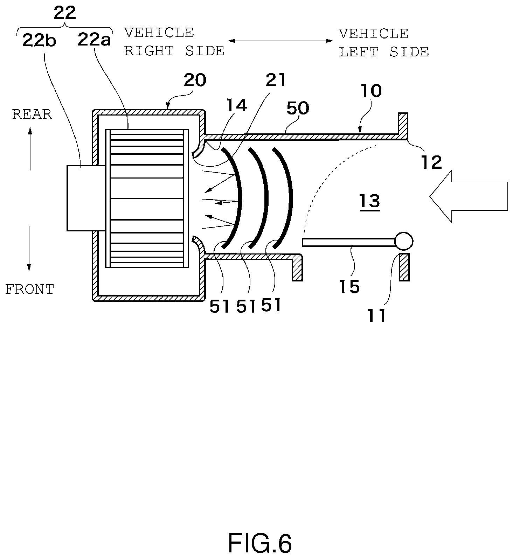

Fig. 6 is a schematic drawing illustrating a fourth example of a modification of the reflecting surface illustrated in Fig. 2. Fig. 6 is a view of the reflecting surfaces 51 viewed from above of the vehicle. Although the mode in which the reflecting surfaces 51 are flat surfaces have mainly been described, the reflecting surfaces 51 may be depressed curved surfaces as illustrated in Fig. 6. The term "depressed curved surface" means a curved surface depressed in an opposite direction from the direction where the outlet port 14 exists. When the reflecting surfaces 51 are curved surfaces, a lateral cross-sectional shape taken along the width direction (the fore-and-aft direction in Fig. 6) of the reflecting surfaces 51 is a curved shape such as an arc shape, an elliptic arc shape, or curved shapes other than the arc shape and the elliptic arc shape. With the curved reflecting surfaces 51, a reflected sound is concentrated to a noise generating source (a blower) further effectively to further reduce the noise.

Preferably, the reflecting surfaces 51 include a plurality of areas having different curvatures when the reflecting surfaces 51 are curved surfaces. An attenuation effect for sounds in a larger frequency range can be obtained. A mode in which the plurality of areas having different curvatures is, for example, a mode in which areas having the smallest curvature are arranged at widthwise center portions of the reflecting surfaces 51 and areas having a larger curvature than that of the center portions are arranged on both side portions in the width direction or a mode in which areas having the largest curvature are arranged at the widthwise center portions of the reflecting surfaces 51 and areas having a curvature smaller than that of the widthwise center portions are arranged on both end portions in the width direction. In this embodiment, the mode in which the plurality of areas have different curvatures includes a mode in which the curvature is continuously changed as the mode in which the lateral cross-sectional shape in the width direction of the reflecting surfaces 51 is an elliptical arc shape.

Even though the reflecting surfaces 51 are curved surfaces, in the same manner as a case where the reflecting surfaces 51 are flat surfaces, the thickness of the portions of the wall where the reflecting surfaces 51 are provided may be set to be larger than the thickness of portions of the wall where the surfaces 52 connected to the reflecting surfaces 51 are provided as illustrated in Fig. 3, the reinforcing ribs 53 and 54 may be provided on the outer wall surface 61 of portions of the wall where the reflecting surfaces 51 are provided as illustrated in Fig. 4 and Fig. 5, or the thickness of portions of the wall where the reflecting surfaces 51 are provided may be set to be larger than the portions of the wall where the surfaces 52 connected to the reflecting surfaces 51 are provided, and the reinforcing ribs 53 and 54 may be provided on the outer wall surface 61 of the portions of the wall where the reflecting surfaces 51 are provided.

According to the vehicle air-conditioning apparatus 1 of the embodiment, preferably, a plurality of reflecting surfaces 51 and the surfaces 52 connected to the reflecting surfaces 51 are arranged alternately in a staircase manner and the reflecting surfaces 51 have nonsimilar shapes with respect to each other as illustrated in Fig. 2. An attenuation effect for sounds in a larger frequency range can be obtained. A combination of the plurality of reflecting surfaces 51 is, for example, a combination of the flat-shaped reflecting surfaces and the curved-shaped reflecting surfaces, or a combination of curved-shaped reflecting surfaces having different shapes from each other. The combination of the curved-shaped reflecting surfaces having different shapes from each other includes a mode in which the plurality of reflecting surfaces 51 are arranged in a descending order in the maximum curvature of the widthwise lateral cross section of the reflecting surfaces 51 from the outlet port 14 side, and a mode in which the plurality of reflecting surfaces 51 are arranged in an ascending order in the maximum curvature of the widthwise lateral cross section of the reflecting surfaces 51 from the outlet port 14 side. The mode in which the plurality of reflecting surfaces 51 are arranged in a descending order in the maximum curvature of the widthwise lateral cross section of the reflecting surfaces 51 from the outlet port 14 side is more preferable. An attenuation effect for sounds in a larger frequency range can be obtained.

Although the mode in which the reflecting surfaces 51 are provided on the inner wall surface on the lower portion of the inner wall surface of the cylindrical portion 50 has been described thus far, the invention is not limited thereto, and the reflecting surfaces 51 may be provided on an upper portion of the inner wall surface of the cylindrical portion 50, for example. The reflecting surfaces 51 may be provided in a plurality of directions on the inner wall surface of the cylindrical portion 50. The mode in which the reflecting surfaces 51 are provided in a plurality of directions on the inner wall surface of the cylindrical portion 50 is, for example, a mode of providing both on the lower portion of the inner wall surface and on the upper portion of the inner wall surface of the cylindrical portion 50.

### Reference Signs List

- 1:: vehicle air-conditioning apparatus
- 2:: case
- 10:: intake unit
- 11:: outside air introduction port
- 12:: inside air introduction port
- 13:: intake passage
- 14:: outlet port
- 15:: inside and outside air switching door
- 16:: water passing portion
- 20:: blast unit
- 21:: intake port
- 22:: blower
- 22a:: centrifugal multiblade fan
- 22b:: motor
- 23:: bell mouth
- 30:: temperature regulating unit
- 31:: cooling heat exchanger
- 32:: heating heat exchanger
- 33:: air mixing door
- 40:: air distributing portion
- 41:: defrost opening
- 42:: ventilation opening
- 43:: foot opening
- 44, 45, 46:: mode door
- 50:: cylindrical portion
- 51:: reflecting surface
- 51u:: upper end of the reflecting surface
- 51b:: lower end of the reflecting surface
- 52:: surface connected to the reflecting surfaces
- 53:: reinforcing rib
- 54:: reinforcing rib
- 55:: bent portion
- 61:: outer wall surface
- F1:: surface formed by outlet port
- F2:: surface formed by intake port

## Claims

1. A vehicle air-conditioning apparatus (1) comprising:
an intake unit (10) having an outside air introduction port (11) configured to take air outside a vehicle, an inside air introduction port (12) configured to take air inside the vehicle interior, an intake passage (13) in which air taken from one or both of the outside air introduction port and the inside air introduction port flows, and an outlet port (14) from which the taken air flows out;
a blast unit (20) having an intake port (21) for taking air flowed out from the outlet port (14) and a blower (22) for sucking air from the intake port and blowing the air to downstream; and
a temperature regulating unit (30) configured to regulate the temperature of blown air blown by the blower (22), wherein
a wall which forms the intake passage (13) includes a cylindrical portion (50) having a downstream end at the outlet port (14),
and part of an inner wall surface of the cylindrical portion (50) is a reflecting surface (51) configured to reflect a noise of the blower entering the intake passage (13) toward the outlet port (14),
wherein the reflecting surface (51) is provided on a lower portion of the inner wall surface of the cylindrical portion (50)in the vertical direction of the vehicle,
a surface (52) connected to an upper end (51u) of the reflecting surface (51) and a surface (52) connected to a lower end (51b) of the reflecting surface (51) form downward inclining surfaces directed toward the outlet port (14) in the vertical direction of the vehicle, **characterized in that** the thickness of a portion of wall where the reflecting surface (51) is provided is larger than thickness of a portion of wall where the surface (52) connected to the reflecting surface is provided.

2. The vehicle air-conditioning apparatus (1) according to Claim 1, wherein the reflecting surface (51) opposes a surface (F2) formed by the intake port (21).

3. The vehicle air-conditioning apparatus (1) according to any one of Claims 1 to 2, wherein an outer wall surface (61) of the portion of the wall where the reflecting surface (51) is provided comprises reinforcing ribs (53, 54).

4. The vehicle air-conditioning apparatus (1) according to any one of Claims 1 to 3, wherein the reflecting surface (51) is a depressed curved surface.

5. The vehicle air-conditioning apparatus (1) according to Claim 4, wherein the reflecting surface (51) includes a plurality of areas having different curvatures.

6. The vehicle air-conditioning apparatus (1) according to any one of Claims 1 to 5, wherein a plurality of reflecting surfaces (51) and the surfaces (52) connected to the reflecting surfaces are arranged alternately in a staircase manner, and
the reflecting surfaces (51) have nonsimilar shapes with respect to each other.

7. The vehicle air-conditioning apparatus (1) according to Claim 6, wherein the plurality of reflecting surfaces (51) are depressed curved surfaces, and
are arranged in a descending order in the maximum curvature of the widthwise lateral cross section of the reflecting surfaces (51) from the outlet port (14) side.

## Patentansprüche

1. Fahrzeugklimaanlage (1), umfassend:
eine Einlasseinheit (10) mit einem Außenlufteinleitungskanal (11), der konfiguriert ist, um Luft von außerhalb eines Fahrzeugs aufzunehmen, einem Innenlufteinleitungskanal (12), der konfiguriert ist, um Luft aus dem Fahrzeuginneren aufzunehmen, einem Einlassdurchgang (13), durch den aus dem Außenlufteinleitungskanal und/oder dem Innenlufteinleitungskanal aufgenommene Luft strömt, sowie mit einem Auslasskanal (14), aus dem die aufgenommene Luft ausströmt;
eine Belüftungseinheit (20) mit einem Einlasskanal (21), um aus dem Auslasskanal (14) ausströmende Luft aufzunehmen, und einem Gebläse (22), um Luft aus dem Einlasskanal zu saugen und die Luft stromabwärts zu blasen; und
eine Temperaturreguliereinheit (30), die konfiguriert ist, um die Temperatur der vom Gebläse (22) abgegebenen Luft zu regulieren, wobei
eine Wand, die den Einlassdurchgang (13) bildet, einen zylindrischen Abschnitt (50) mit einem stromabwärts befindlichen Ende am Auslasskanal (14) beinhaltet,
und ein Teil einer Innenwandoberfläche des zylindrischen Abschnitts (50) eine reflektierende Oberfläche (51) ist, die konfiguriert ist, um ein in den Einlassdurchgang (13) eintretendes Geräusch des Gebläses hin zum Auslasskanal (14) zu reflektieren,
wobei die reflektierende Oberfläche (51) an einem unteren Abschnitt der Innenwandoberfläche des zylindrischen Abschnitts (50) in der vertikalen Richtung des Fahrzeugs vorgesehen ist,
wobei eine Oberfläche (52), die mit einem oberen Ende (51u) der reflektierenden Oberfläche (51) verbunden ist, und eine Oberfläche (52), die mit einem unteren Ende (51b) der reflektierenden Oberfläche (51) verbunden ist, nach unten geneigte Oberflächen bilden, die hin zum Auslasskanal (14) in der vertikalen Richtung des Fahrzeugs ausgerichtet sind,
**dadurch gekennzeichnet, dass**
die Dicke eines Wandabschnitts, wo die reflektierende Oberfläche (51) vorgesehen ist, größer als die Dicke eines Wandabschnitts ist, wo die mit der reflektierenden Oberfläche verbundene Oberfläche (52) vorgesehen ist.

2. Fahrzeugklimaanlage (1) nach Anspruch 1, wobei die reflektierende Oberfläche (51) einer durch den Einlasskanal (21) gebildeten Oberfläche (F2) gegenüberliegt.

3. Fahrzeugklimaanlage (1) nach einem der Ansprüche 1 bis 2, wobei eine Außenwandoberfläche (61) des Wandabschnitts, wo die reflektierende Oberfläche (51) vorgesehen ist, Verstärkungsrippen (53, 54) umfasst.

4. Fahrzeugklimaanlage (1) nach einem der Ansprüche 1 bis 3, wobei die reflektierende Oberfläche (51) eine abgesenkte gekrümmte Oberfläche ist.

5. Fahrzeugklimaanlage (1) nach Anspruch 4, wobei die reflektierende Oberfläche (51) mehrere Flächen mit unterschiedlichen Krümmungen aufweist.

6. Fahrzeugklimaanlage (1) nach einem der Ansprüche 1 bis 5, wobei mehrere reflektierende Oberflächen (51) und die mit den reflektierenden Oberflächen verbundenen Oberflächen (52) abwechselnd treppenartig angeordnet sind, und wobei
die reflektierenden Oberflächen (51) im Verhältnis zueinander unähnliche Formen aufweisen.

7. Fahrzeugklimaanlage (1) nach Anspruch 6, wobei die mehreren reflektierenden Oberflächen (51) abgesenkte gekrümmte Oberflächen sind, und
in einer absteigenden Reihenfolge in der maximalen Krümmung des breitseitigen lateralen Querschnitts der reflektierenden Oberflächen (51) von der Seite des Auslasskanals (14) aus angeordnet sind.

## Revendications

1. Appareil de climatisation de véhicule (1) comprenant :
une unité d'admission (10) ayant un orifice d'introduction d'air extérieur (11) conçu pour prélever l'air à l'extérieur d'un véhicule, un orifice d'introduction d'air intérieur (12) conçu pour prélever l'air à l'intérieur du véhicule, un passage d'admission (13) dans lequel s'écoule l'air prélevé provenant de l'orifice d'introduction d'air extérieur et/ou de l'orifice d'introduction d'air intérieur, et un orifice de sortie (14) à partir duquel s'écoule l'air prélevé ;
une unité de projection (20) ayant un orifice d'admission (21) pour prélever l'air s'écoulant hors de l'orifice de sortie (14) et un ventilateur (22) pour aspirer l'air provenant de l'orifice d'admission et souffler l'air vers l'aval ; et
une unité de régulation de température (30) conçue pour réguler la température de l'air soufflé qui est soufflé par le ventilateur (22),
une paroi qui forme le passage d'admission (13) comprenant une partie cylindrique (50) ayant une extrémité aval au niveau de l'orifice de sortie (14),
et une partie d'une surface de paroi interne de la partie cylindrique (50) étant une surface réfléchissante (51) conçue pour réfléchir un bruit du ventilateur entrant dans le passage d'admission (13) vers l'orifice de sortie (14),
la surface réfléchissante (51) étant disposée sur une partie inférieure de la surface de paroi interne de la partie cylindrique (50) dans la direction verticale du véhicule,
une surface (52) reliée à une extrémité supérieure (51u) de la surface réfléchissante (51) et une surface (52) reliée à une extrémité inférieure (51b) de la surface réfléchissante (51) formant des surfaces inclinées vers le bas dirigées vers l'orifice de sortie (14) dans la direction verticale du véhicule,
**caractérisé en ce que** l'épaisseur d'une partie de paroi où la surface réfléchissante (51) est disposée est plus grande que l'épaisseur d'une partie de paroi où la surface (52) reliée à la surface réfléchissante est disposée.

2. Appareil de climatisation de véhicule (1) selon la revendication 1, dans lequel la surface réfléchissante (51) est opposée à une surface (F2) formée par l'orifice d'admission (21).

3. Appareil de climatisation de véhicule (1) selon la revendication 1 ou 2, dans lequel une surface de paroi extérieure (61) de la partie de la paroi où la surface réfléchissante (51) est située comprend des nervures de renforcement (53, 54).

4. Appareil de climatisation de véhicule (1) selon l'une quelconque des revendications 1 à 3, dans lequel la surface réfléchissante (51) est une surface courbe enfoncée.

5. Appareil de climatisation de véhicule (1) selon la revendication 4, dans lequel la surface réfléchissante (51) comprend une pluralité de zones ayant des courbes différentes.

6. Appareil de climatisation de véhicule (1) selon l'une quelconque des revendications 1 à 5, dans lequel une pluralité de surfaces réfléchissantes (51) et les surfaces (52) reliées aux surfaces réfléchissantes sont disposées alternativement en escalier, et
les surfaces réfléchissantes (51) ont des formes non similaires les unes par rapport aux autres.

7. Appareil de climatisation de véhicule (1) selon la revendication 6, dans lequel la pluralité de surfaces réfléchissantes (51) sont des surfaces courbes enfoncées, et
sont disposées dans un ordre décroissant dans la courbure maximale de la section transversale latérale en largeur des surfaces réfléchissantes (51) à partir du côté de l'orifice de sortie (14).
